# EUROPEAN PATENT APPLICATION

(11) **EP 3 199 035 A1**
(43) Date of publication of application: **02.08.2017**
(21) Application number: 15845039.5
(22) Date of filing: 24.09.2015
(51) Int. Cl.: A23L 7/104, A21D 8/04, A21D 13/04, A23L 33/10

(54) **WHEAT FLOUR SUBSTITUTE RICE FLOUR, AND METHOD FOR MANUFACTURING GLUTEN-FREE RICE FLOUR BREAD**

(30) Priority: 26.09.2014 JP 2014197183
(71) Applicant: NATIONAL AGRICULTURE AND FOOD RESEARCH ORGANIZATION, Tsukuba-shi, Ibaraki 305-8517 (JP)
(72) Inventor: ARAKI Etsuko, Tsukuba-shi Ibaraki 305-8518 (JP); SUZUKI Yasuhiro, Tsukuba-shi Ibaraki 305-8518 (JP); SUZUKI Keitaro, Tsukuba-shi Ibaraki 305-8518 (JP); HAMADA Shigeki, Hirosaki-shi Aomori 036-8561 (JP)
(74) Representative: Denison, Christopher Marcus
(86) International application number: PCT/JP2015/076882
(87) International publication number: WO 2016/047668

(57) **Abstract**

This invention is intended to enable the development of and provide rice flour that allows easy production of bread made from 100% rice flour that raises well and is finely textured at a bakery or in a home and a method for producing bread made from 100% rice flour using such rice flour. More specifically, this invention is intended to provide rice flour that is prepared by pretreatment comprising mixing rice flour, protease, and water to prepare dough made from rice flour and heating such resulting dough at a temperature from 40°C or more but less than 60°C for 3 to 20 hours and a method for producing bread made from rice flour using such rice flour.

## Description

### Technical Field

The present invention relates to rice flour, which is prepared via protease treatment at a predetermined temperature for a predetermined period of time as rice flour as an alternative to wheat flour, and a method for producing gluten-free bread made from such rice flour.

### Background Art

Food allergies are allergic diseases resulting from overactive immune responses to particular types of allergens contained in foods upon ingestion thereof. While major symptoms are dermal and mucosal symptoms accompanied by itching, such as hives, disorders of the respiratory system symptoms causing difficulty breathing and digestive system symptoms, such as diarrhea or vomiting, often develop. As a more severe symptom, anaphylactic shock may occasionally occur, which could result in death at worst. Accordingly, it is necessary that patients with food allergies always pay attention to food so as to avoid ingesting allergens in diet during their daily lives. This imposes mental burdens and stress not only on patients but also on their families. Since the types of foods that patients with food allergies can ingest are limited, types of meals remain unchanged. This also imposes problems in terms of quality of life (QOL), since the enjoyment or pleasure of eating is lost. When antigens are contained in raw materials that are frequently used for staple foods and various food products, in particular, serious limitations are required in daily diet, which makes the situation more serious. As one example, patients with celiac diseases exhibiting immune responses to gluten contained in wheat flour cannot ingest any food products containing wheat flour as a raw material. While there are 200,000 to 400,000 patients with celiac diseases in Japan, the number of such patients is particularly high in Europe and the United States, and it is deduced that there are approximately 3,000,000 such patients in the United States and approximately 2,500,000 such patients in Europe. That is, one out of every approximately 100 to 150 people is afflicted with celiac disease.

At present, there are no radical treatments for celiac disease, and the means of avoiding allergens is limited to selective ingestion of gluten-free foods. In Europe and the United States, where many people are afflicted with celiac disease, however, wheat flour products, such as bread and pasta, are staple foods, and it is not practical to eliminate such products from dietary lives. Accordingly, the development of bread made from rice flour has been developed around the world as an alternative to wheat-flour-based bread with the use of gluten-free rice flour as starting cereal flour.

With increased amount of rice flour in bread made from rice flour, it becomes difficult to maintain a sufficient raising extent, a mouth feeling texture, and a flavor. Accordingly, 100% gluten-free bread made from rice flour according to conventional techniques has serious problems, such as insufficient extent of raising, coarse texture, poor flavor, and poor mouth feeling texture.

As a technique for raising bread made from 100% rice flour that does not contain wheat flour or gluten, a method comprising adding a polysaccharide thickener, such as guar gum or hydroxypropyl methylcellulose (HPMC), has been reported (JP2005-245409A). In addition, the addition of potato starch (JP2005-253361A) or defatted soymeal has been reported. However, it is difficult to identify bread made from rice flour produced by such conventional techniques as bread made from 100% rice flour.

In addition, a method for producing bread made from 100% rice flour that is raised well without using the thickener has been developed. An example is a method involving the addition of an additive, such as glucose oxidase or glutathione (JP2011-62096A). By adding glutathione, the resulting bread made from 100% rice flour can be raised well and have a fine, and tender texture. However, compounds used as additives are often chemical reagents, and consumers are reluctant to accept the use of such additives from the viewpoint of safety. In fact, the use of glutathione as an additive has not been approved in Japan, and the practical use thereof cannot be thus expected. In addition, it is necessary that glutathione be highly purified, which would disadvantageously increase the cost.

Examples of methods that do not involve the use of additives include a method of applying a plastic foaming technique (JP2003-189786A), a method in which rice flour is pre-fermented by malted rice (JP2012-115197A), and a method using protease derived from *Bacillus stearothermophilus* (JP2014-33646A). However, the method of applying a plastic foaming technique has problems such that the raising extent is not sufficient and the flavor deteriorates. While the pre-fermentation method by malted rice and the method using protease derived from *Bacillus stearothermophilus* are satisfactory for producing well-raised bread with a fine and tender texture, such techniques need time and equipment to pre-ferment and treat with the protease. Accordingly, it is difficult to easily prepare bread of interest at a bakery or in a home.

That is, no techniques have been established for producing 100% gluten-free bread made from rice flour that is satisfactory in terms of the raising extent, a mouth feeling texture, and a flavor and can be easily produced at a bakery or in a home.

### Summary of the Invention

### Objects to Be Achieved by the Invention

The first object of the present invention is to develop and provide a method for producing bread made from 100% rice flour that raises well and is finely textured.

The second object of the present invention is to develop and provide rice flour that can become a substitute for wheat flour and makes it possible to easily produce bread made from 100% rice flour at a bakery or in a home.

### Means for Attaining the Objects

The present inventors have conducted concentrated studies to solve the above objects. As a result, they succeeded in producing well-raised bread using 100% rice flour treated at a predetermined temperature for a given period of time, even if such rice flour does not contain any additive such as a thickener. Furthermore, by mixing protease with the rice flour, they have succeeded in producing bread that has been satisfactory in terms of tenderness and a mouth feeling texture, as well as the raising extent. When bread was produced by treating dough made from rice flour with protease at a predetermined temperature, drying the dough before fermentation, triturating the rice flour, and kneading the triturated rice flour again, it was found that the raising extent and the fineness of the texture of bread made from rice flour would not deteriorate. The present invention is based on the results of the research and development described above, and the present invention provides the following.
(1) A method for treating rice flour with protease comprising producing dough made from rice flour by mixing rice flour with water, mixing protease with the dough made from rice flour, and heating the dough made from rice flour at 40°C or more but less than 60°C for 3 to 20 hours.
(2) A dough made from protease-treated rice flour obtained by the method comprising producing dough made from rice flour by mixing rice flour with water, mixing protease with the dough made from rice flour, and heating the dough made from rice flour at 40°C or more but less than 60°C for 3 to 20 hours.
(3) A method for producing dry dough made from protease-treated rice flour comprising drying of the dough made from protease-treated rice flour according to (2).
(4) The method for producing dry dough made from protease-treated rice flour according to (3), further comprising fragmenting dough made from rice flour before and/or after the drying step.
(5) Dry dough made from protease-treated rice flour obtained by a method comprising drying of the dough made from protease-treated rice flour according to (2).
(6) The dry dough made from protease-treated rice flour according to (5), which is obtained by a method further comprising fragmenting dry dough made from protease-treated rice flour before and/or after the drying step.
(7) A method for producing dry powder of protease-treated rice flour comprising triturating the dry dough made from protease-treated rice flour according to (5) or (6).
(8) The method for producing dry powder of protease-treated rice flour according to (7), further comprising sieving the product after the step of triturating.
(9) The method for producing dry powder of protease-treated rice flour according to (8), further comprising repeating the trituration step and the sieving step.
(10) Dry powder of protease-treated rice flour obtained by a method comprising triturating the dry dough made from protease-treated rice flour according to (5) or (6).
(11) The dry powder of protease-treated rice flour according to (10), which is obtained by a method further comprising sieving the product after the step of triturating.
(12) The dry powder of protease-treated rice flour according to (11), which is obtained by a method further comprising repeating the trituration step and the sieving step.
(13) A method for producing bread made from rice flour comprising producing fermented-dough by adding yeast and a sugar to the dough made from protease-treated rice flour according to (2), the dry dough made from protease-treated rice flour according to (5) or (6), or the dry powder of protease-treated rice flour according to any of (10) to (12) and kneading the mixture, fermenting the fermented-dough at 25°C to 40°C, and baking bread dough after the step of fermenting.
(14) A bread made from rice flour obtained by a method comprising producing fermented-dough by adding yeast and a sugar to the dough made from protease-treated rice flour according to (2), the dry dough made from protease-treated rice flour according to (5) or (6), or the dry powder of protease-treated rice flour according to any of (10) to (12) and kneading the mixture, fermenting the fermented-dough at 25°C to 40°C, and baking bread dough after the fermentation step.
(15) A method for treating rice flour comprising producing dough made from rice flour by mixing rice flour with water and heating the dough made from rice flour at 35°C or more but less than 60°C for 3 to 20 hours.

This description includes part or all of the content of the disclosure of Japanese Patent Application No. 2014-197183, which is a priority document of the present application.

### Effects of the Invention

According to the method of treating rice flour with protease of the present invention, rice flour that enables easy production of bread made from 100% rice flour, which is satisfactory in terms of the storage stability, the raising extent, the fineness of the texture, and the mouth feeling texture can be provided at a bakery or in a home.

According to the method of producing bread made from rice flour of the present invention, bread made from 100% rice flour with a sufficient raising extent and a tender and good mouth feeling texture can be provided.

### Brief Description of the Drawings

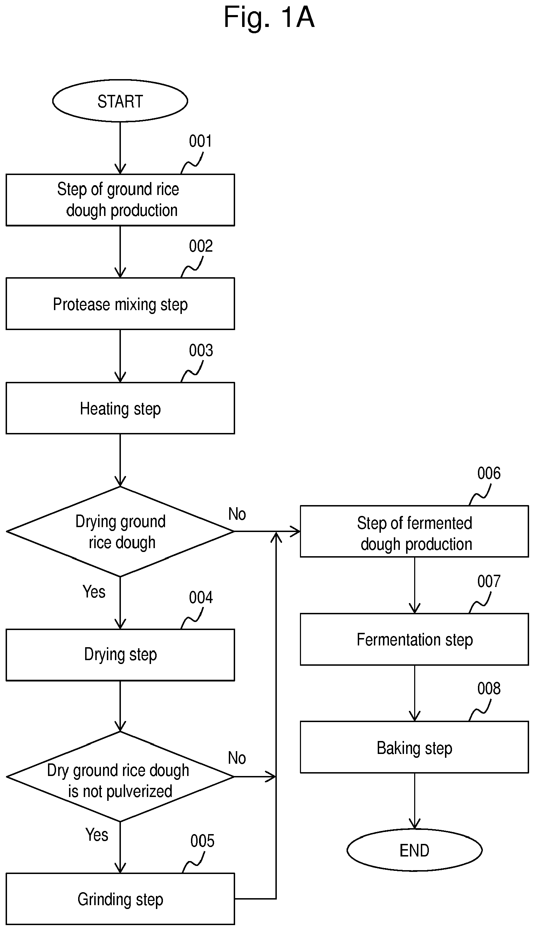

Fig. 1A shows a flow chart of the method for producing bread made from rice flour according to the present invention. Steps showing (001) to (003) correspond to the second embodiment of the present invention. Steps showing (001) to (004) correspond to the third embodiment thereof. Steps showing (001) to (005) correspond to the fourth embodiment thereof. Steps showing (001) to (008) correspond to the fifth embodiment thereof. Fig. 1A shows a case in which the heating step (003) is carried out following the protease-mixing step (002).

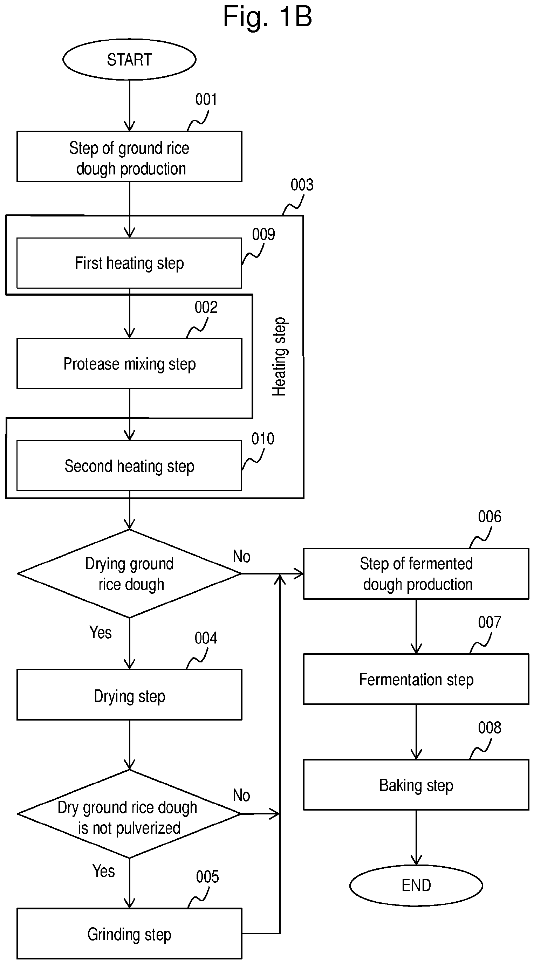

Fig. 1B shows another flow chart of the method for producing bread made from rice flour according to the present invention. In Fig. 1B, the heating step (003) is divided into a first heating step (009), which is carried out after producing dough made from rice flour (001) and before mixing protease (002), and a second heating step (010), which is carried out after the protease mixing step (002).

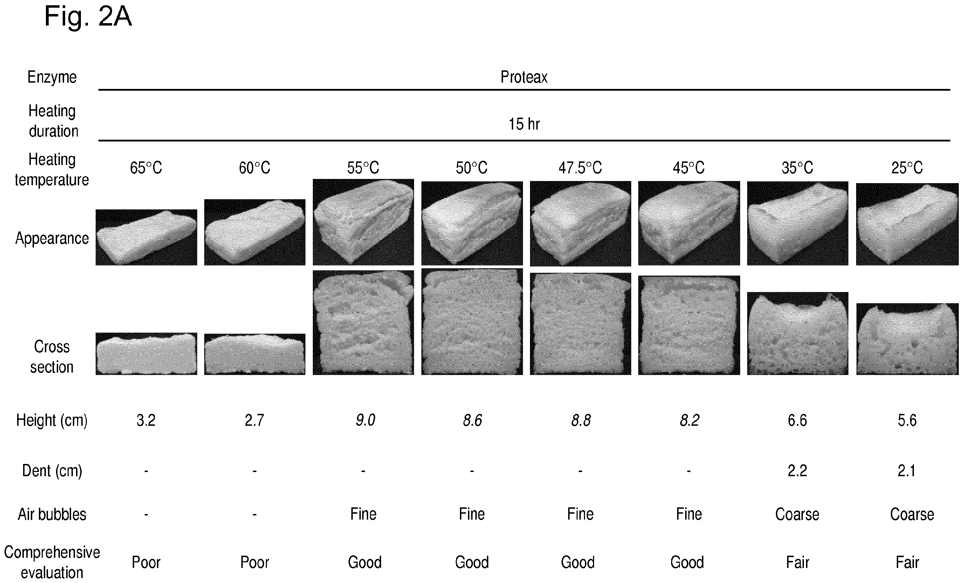

Fig. 2A shows the bread height, air bubbles inside the bread, a dent on the top surface of the bread, and the results of comprehensive evaluation when bread made from 100% rice flour is produced with the use of dough made from rice flour (rice variety: Koshihikari) treated with protease (Proteax) at various heating temperatures for 15 hours. The bread height represents the length (cm) of the bread from the bottom to the top, indicating the raising extent of the bread. When a height of 7 cm or more (which is indicated in *italics*) was achieved herein, the raising extent was evaluated as being sufficient. The air bubbles inside the bread are air bubbles of average size observed in a cross section when the bread was cut, indicating the fineness of the bread texture. As the sizes of air bubbles decreases, the degree of fineness increases. That is, the bread comes to have a better mouth feeling texture. When air bubbles are not clearly recognized by visually observing the inside of the bread at a distance of about 20 cm therefrom, the air bubbles (i.e., a degree of fineness) are designated as being fine, and this is shown as "fine" in the drawing. When air bubbles are large and clearly recognized, in contrast, the air bubbles (i.e., a degree of fineness) are designated as being coarse, and this is indicated as "coarse" in the drawing. When the bread has not raised and substantially no air bubbles can be observed inside the bread at a very short distance from the bread, the bread is determined to have no air bubbles, which is indicated as "-" in the drawing. A dent on the top surface of the bread indicates the length (the depth; cm) from the highest position of the top surface of the bread to the lowest position of the dent. While such dent does not affect the raising extent or the texture of the bread, the appearance of the bread deteriorates because of such dent. Thus, information concerning the dent is thus provided for reference. In general, bread with good appearance is flat or it raises somewhat from the top at its center. Bread of such configuration is determined to be free of dents, which is indicated as "-" in the drawing. The results of comprehensive evaluation are indicated as "good," "fair," or "poor." When the bread height is 7 cm or more and air bubbles inside the bread are fine, the bread is evaluated to be bread made from 100% rice flour that is satisfactory in terms of the raising extent, the fineness of the texture, and the mouth feeling texture (evaluated as "good"). When the bread height is 5 cm or more, air bubbles inside the bread are coarse, and a certain raising extent is observed, the bread is evaluated as bread made from 100% rice flour that has a coarse, poor mouth feeling texture (evaluated as "fair"). When the bread height is less than 5 cm and air bubbles are coarse or no texture is observed, such "bread" does not raise, and it is not approved as "bread." Thus, it is indicated as "poor."

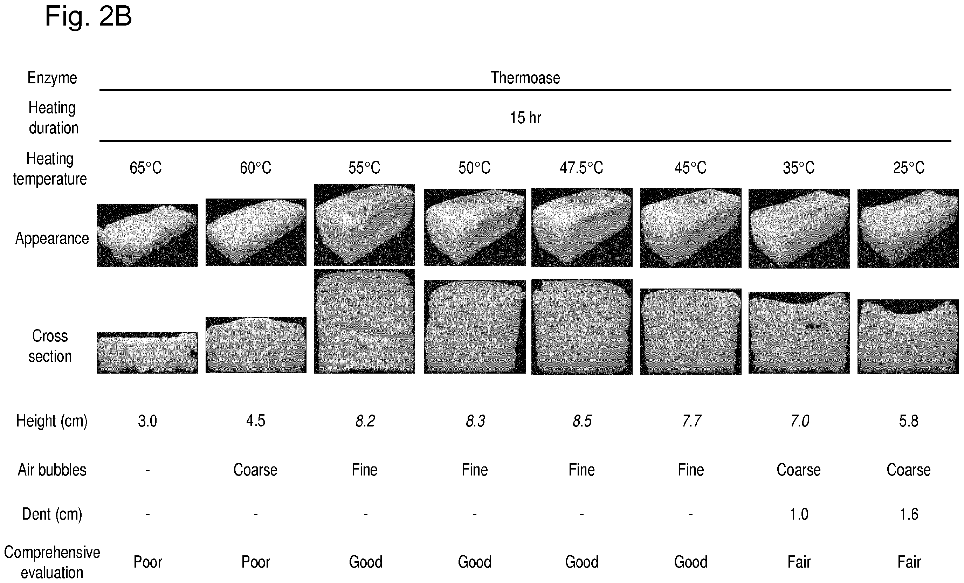

Fig. 2B shows the results of the treatment conducted in the same manner as in Fig. 2A, except for the use of Thermoase as protease. The bread height, air bubbles inside the bread, the dent on the top surface of the bread, and the comprehensive evaluation were determined in accordance with the standards shown in Fig. 2A.

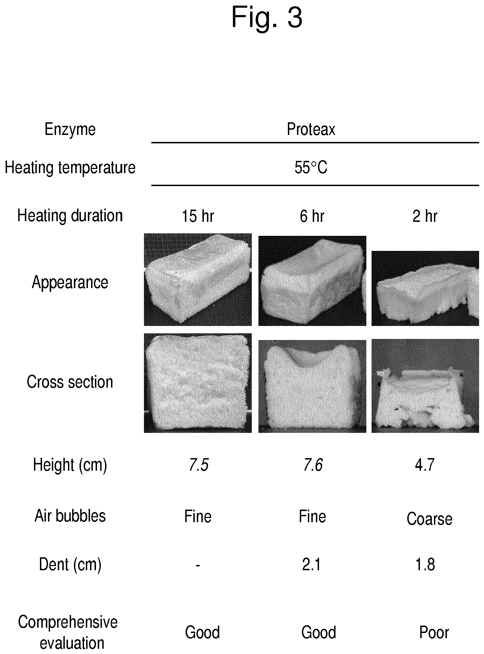

Fig. 3 shows the bread height, air bubbles inside the bread, a dent on the top surface of the bread, and the results of comprehensive evaluation of bread made from 100% rice flour produced using dough made from protease-treated rice flour (rice variety: Konadamon) at 55°C for various periods of treatment time. Evaluation took place in accordance with the standards shown in Fig. 2A.

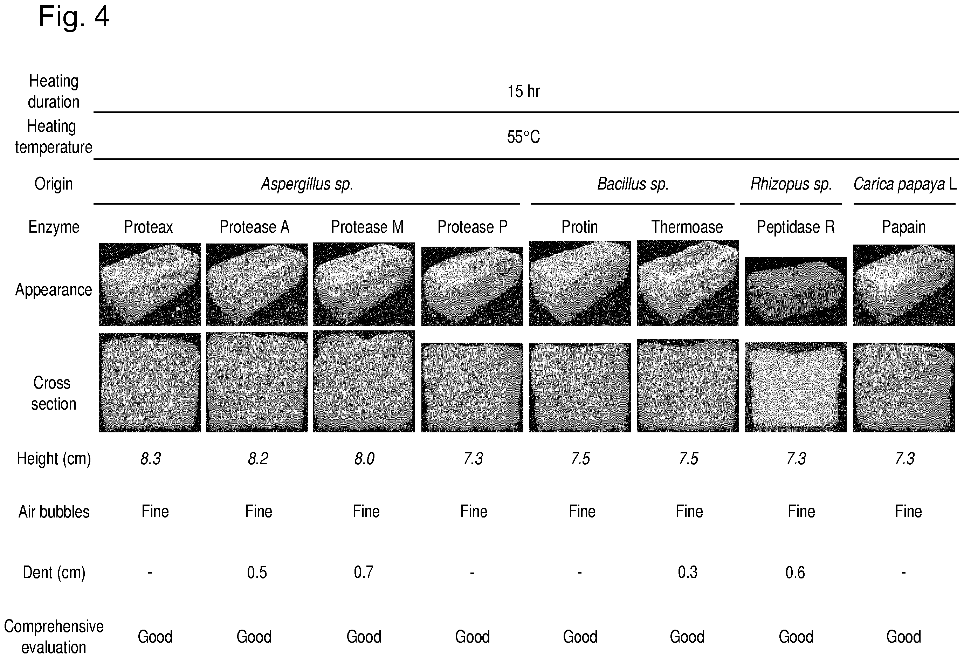

Fig. 4 shows the bread height, air bubbles inside the bread, a dent on the top surface of the bread, and the results of comprehensive evaluation of bread made from 100% rice flour of the present invention produced by treating dough made from protease-treated rice flour (rice variety: Konadamon) with various proteases at 55°C for 15 hours. Evaluation took place in accordance with the standards shown in Fig. 2A.

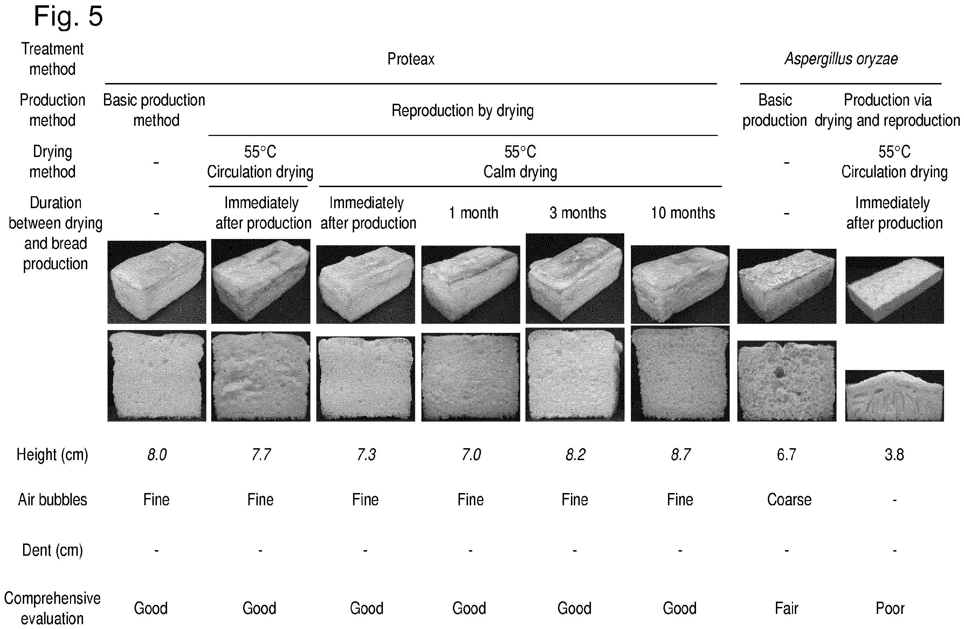

Fig. 5 shows the results of the production of bread made from 100% rice flour using dry powder of the protease-treated rice flour of the present invention. The bread height, air bubbles inside the bread, and a dent on the top surface of the bread, were assayed, and the comprehensive evaluation took place in accordance with the standards shown in Fig. 2A.

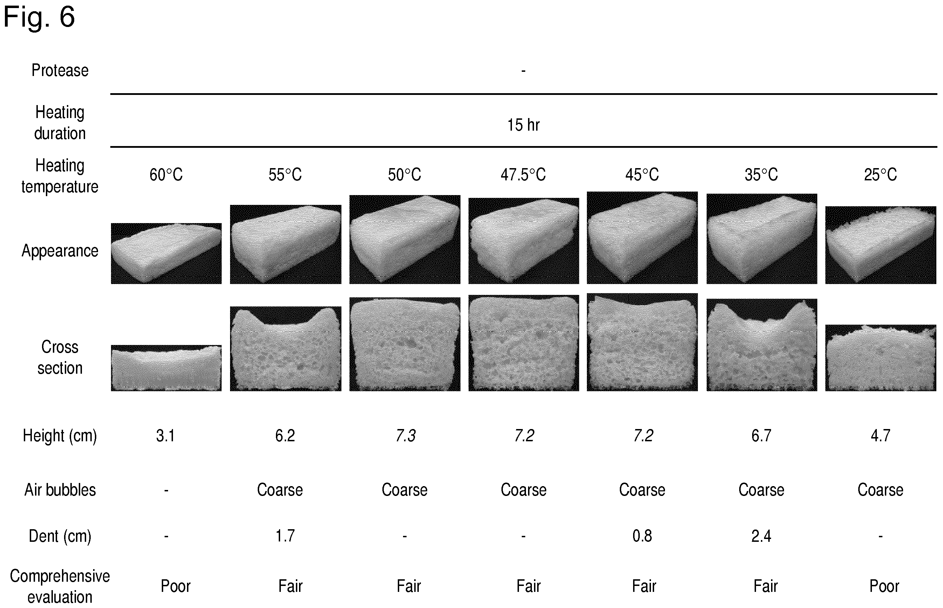

Fig. 6 shows the bread height, air bubbles inside the bread, a dent on the top surface of the bread, and the results of comprehensive evaluation of bread made from 100% rice flour that was produced by treating dough made from rice flour (rice variety: Koshihikari) at various heating temperatures for 15 hours without the addition of protease. Evaluation took place in accordance with the standards shown in Fig. 2A.

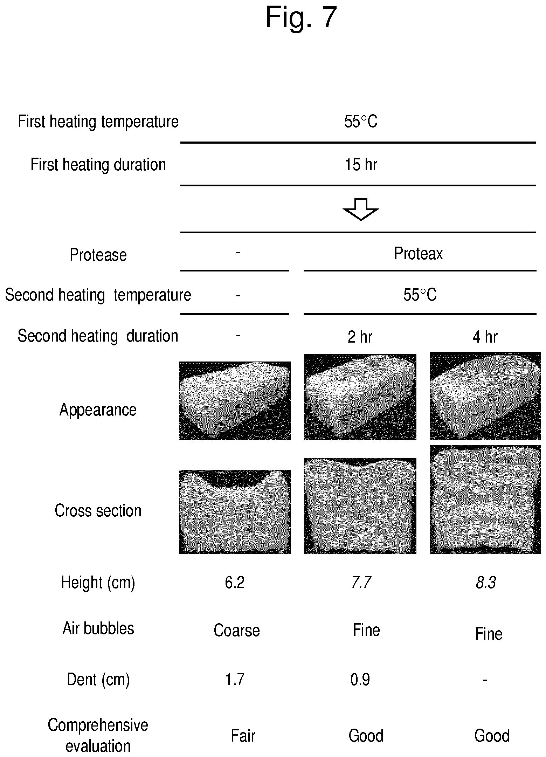

Fig. 7 shows the bread height, air bubbles inside the bread, a dent on the top surface of the bread, and the results of comprehensive evaluation of bread made from 100% rice flour that was produced by treating dough made from rice flour (rice variety: Koshihikari) by dividing the heating step into a first heating step before the protease-mixing step and a second heating step after the protease-mixing step. Evaluation took place in accordance with the standards shown in Fig. 2A. The first heating step was carried out at 55°C for 15 hours and the second heating step was carried out at 55°C for 2 or 4 hours.

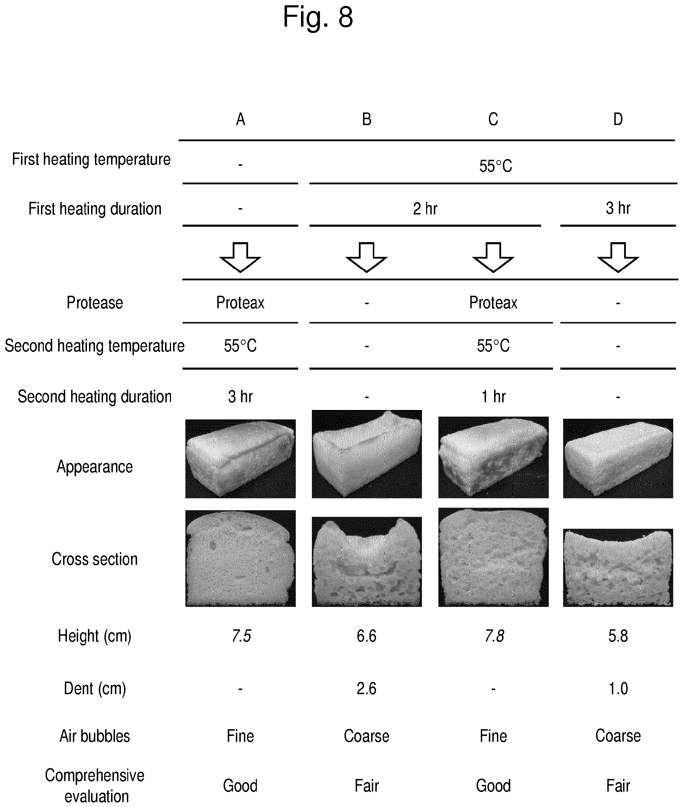

Fig. 8 shows the bread height, air bubbles inside the bread, a dent on the top surface of the bread, and the results of comprehensive evaluation of bread made from 100% rice flour resulting from the treatment in which the producing step of dough made from rice flour and the protease-mixing step were followed by heating step by treating dough made from rice flour (rice variety: Koshihikari) at 55°C for 3 hours and the results of treatment in which the heating step has divided into a first heating step before the protease-mixing step and a second heating step after the protease-mixing step in which the dough was treated at 55°C for 2 hours and at 55°C for 1 hour, respectively. Evaluation took place in accordance with the standards shown in Fig. 2A.

### Embodiments for Carrying out the Invention

### 1. Method for treatment of rice flour with protease

### 1-1. Summary

The first aspect of the present invention relates to a method for treatment of rice flour with protease. The method of the present invention comprises treating rice flour with protease for food application at a predetermined temperature for a given period of time. Because a protein in the rice flour is degraded to an adequate extent as a result of such treatment, dough that can easily retain air bubbles can be prepared. The method according to this aspect is a fundamental technique for the second and subsequent aspects of the present invention.

### 1-2. Method

The method for treatment of rice flour with protease according to this aspect comprises, as essential steps, producing step of dough made from rice flour, protease-mixing step, and heating step. Hereafter, these steps are described in detail.

### 1-2-1. Producing step of dough made from rice flour

The "producing step of dough made from rice flour" comprises producing dough made from rice flour by mixing rice flour with water.

### (1) Raw materials

Rice flour, protease, and water are essential raw materials in this aspect. Rice flour and water are used in this step, and protease is used in the protease-mixing step described below.

### (Rice flour)

The raw material of rice flour used in this step is rice seed (*Oryza sativa*); that is, what is usually called "rice." The lineage or a variety of rice used as a raw material is not limited. For example, rice may be *Oryza sativa ssp. japonica* or *ssp. indica.* Any rice variety, such as Koshihikari, Sasanishiki, Akitakomachi, or Konadamon, can be used without limitation, provided that it is of *ssp. japonica.* When producing bread made from 100% rice flour using the rice flour treated by this method as a raw material; however, use of rice with amylose content of 15% by weight or more is preferable from the viewpoint of flavor. Amylose content is more preferably 20% to 25% by weight and further preferably 22% to 24% by weight. Examples of rice varieties with such amylose content include, but are not limited to, Koshihikari (15% to 20% by weight), Konadamon (18% to 21% by weight), Mizuhochikara (20% to 26% by weight), Momiroman (24% to 28% by weight), and Koshinokaori (28% to 35% by weight).

Conditions of rice polishing prior to preparation of rice flour are not limited. It may be rice with the germ or white rice (including pre-washed rice), with white rice being preferable. Before rice flour is prepared, white rice may be dry, or it may be moistened via soaking in water.

The grain size (i.e., the grain diameter) of rice flour is not limited. Rice flour may have a relatively large grain size, which is prepared via roll grinding or pin grinding, or it may have a small grain size, which is prepared with the use of an air-swept mill or stamp mill. In general, the grain size may range from 5 µm to 300 µm (average grain size: 15 µm to 70 µm). When producing bread made from 100% rice flour using, as a raw material, rice flour that had been treated by the method of the present invention, the raising extent is likely to increase as the grain size decreases. Thus, the average grain size is preferably between 15 µm and 40 µm.

As an example for producing white rice flour, a method of wet air-swept milling via soaking in water is described. At the outset, white rice is soaked in water for 2 hours to allow the rice to absorb water, and moisture is removed from the surface using a centrifuge dryer. Subsequently, a grinder, such as a super powder mill (SPM-R290, a vortex pulverizer, Nishimura Machine Works Co., Ltd.), is used to perform air-swept milling, so that ground white rice can be obtained. In such case, the revolution speed of the super powder mill blade may be, for example, 40 Hz to 50 Hz, and the sample feed speed (of the feeders) may be 1 or 2.

### (Other raw materials)

In addition to the essential raw materials described above, adequate or preferable additives can be added, if necessary. Preferable additives can be added to the dough made from rice flour at any time without particular limitation. Additives may be added at an adequate time while refraining from suppressing or inhibiting the production of the dough made from rice flour or protease activity by taking additive types and properties into consideration. For example, additives may be added during this step or during the protease-mixing step described below. Alternatively, additives may be added after the heating step or during a plurality of steps.

Examples of additives include food colors, including natural color and synthetic color, food preservatives, such as sodium benzoate, potassium sorbate, and propionate, antioxidants, such as L-ascorbic acid, erythorbic acid, and tocopherol, leavening agents, such as sodium bicarbonate and gluconolactone, sweeteners, such as aspartame, glycyrrhiza extract, xylitol, D-sorbitol, stevia, and saccharin, aromatics, including natural aromatics and synthetic perfume, and thickeners, such as guar gum, xanthan gum, hydroxypropyl methyl cellulose, carboxymethyl cellulose, pectin, and carrageenan. In addition, butter, egg (egg white and/or egg yolk), sugar, salt, minerals, and the like can be added, according to need, provided that protease activity is not suppressed or inhibited.

From the object to be achieved by the present invention, addition of a gluten-containing food material such as wheat flour is not preferable. However, if such food material is intentionally added merely as a food material and such addition is not intended for food allergy control, such food material may be added.

### (2) Mixing

The term "mixing" refers to thorough mixing of raw materials. According to this aspect, in particular, the term refers to the production of dough made from rice flour via thorough mixing of rice flour, water, protease described below, and other raw materials, according to need.

The term "dough made from rice flour" used herein refers to rice flour dissolved in water. The ratio of rice flour to water is not limited. For example, such dough may be in the form of an aqueous solution with rice flour content of less than 30% by weight, which has fluidity, it may be in the form of a liquid with rice flour content of 30% or more but less than 60% by weight, which has both viscosity and fluidity (as with arrowroot starch gruel), or it may be in the form of a paste with rice flour content of 60% by weight or more, which has no fluidity.

### (Mixing method)

Methods of mixing raw materials are not particularly limited, provided that raw materials are homogeneously dispersed in the resulting dough made from rice flour. An adequate known method may be selected in accordance with, for example, the conditions of dough made from rice flour. When the dough made from rice flour has fluidity, for example, a method involving agitation can be employed. Agitation can be conducted with the use of an adequate agitator. When the dough made from rice flour has no fluidity, a method of kneading (blending) may be employed. Kneading can be conducted with the use of a kneader such as a blender.

Mixing may be carried out until raw materials are thoroughly mixed, and the duration thereof is not particularly limited.

### 1-2-2. Protease-mixing step

In the "protease-mixing step," protease is added to and mixed with the dough made from rice flour.

### (Protease)

In this step, any protease can be used, provided that it can be used for food application. Endopeptidase, exopeptidase, or a mixture thereof may be used. Examples include serine protease such as trypsin, alkaline protease, thiol proteases such as papain, bromelin, actinidine, and ficin, metal protease such as thermolysin, and acidic protease such as pepsin.

Protease can be derived from any organism without particular limitation. For example, protease may be derived from a bacterium, fungus, plant, or animal.

In the case of bacterium-derived protease, the bacterial type is not limited; however, a bacterium of endotoxin free or exotoxin free is preferable since protease is used for food application. Examples include *Bacillus* bacteria, such as *B. subtilis, B. amyloliquefaciens, B. circulans, B. licheniformis, B. stearothermophilus,* and *B. thermoproteolyticus,* and *Streptomyces* bacteria, such as *S. griseus* and *S. kanamyceticus.*

In the case of fungus-derived protease, the fungal type is not limited; however, a fungus free of toxin is preferable since protease is used for food application. Examples include *Aspergillus* fungi, such as *A*. *oryzae, A. melleus, A. niger, A. sojae,* and *A*. *saitoi, Rhizopus* fungi, such as *R. niveus, R. arrhizus,* and *R. oligosporus,* and *Penicillium* fungi, such as *P. duponti, P. galaucum,* and *P. roqueforti.*

In the case of plant-derived protease, the plant type is not limited; however, a plant free of toxin is preferable since protease is used for food application. Examples include plants of the genus *Carica,* such as *C. papaya,* plants of the genus *Ananas,* such as A. *comosus,* plants of the genus *Actinidia,* such as *A*. *chinensis, A. deliciosa,* and *A*. *arguta,* and plants of the genus *Ficus,* such as *F. carica.* In addition, proteases commercially available from various manufacturers may be used.

The amount of protease to be added to dough made from rice flour may be adequately determined within the range of 5 U to 2000 U, and preferably from 7 U to 600 U, per ml of dough made from rice flour, on the basis of a specific activity of relevant protease. In the case of *Bacillus sp*.-derived protein or *Rhizopus sp*.-derived peptidase R, for example, relatively low specific activity of 5 to 20 U is sufficient for 1 ml of the dough. In the case of *Aspergillus sp*.-derived protease P or *Carica papaya L*.-derived papain, a relatively high specific activity of 150 to 2000 U or 600 to 2000 U is preferable. In general, a specific activity of 150 U ± 50 U (100 U to 200 U) is sufficient for 1 ml of the dough. In accordance with various conditions, such as treatment duration, the amount to be added can be adequately adjusted. The specific activity provided herein is based on the method of calculation described in detail in the examples.

### (Mixing method)

In this step, a method of protease mixing is carried out in accordance with the method of mixing described in the producing step of dough made from rice flour above. This step is carried out after the producing step of dough made from rice flour or simultaneously with the producing step of dough made from rice flour. When the protease-mixing step is carried out simultaneously with the producing step of dough made from rice flour, rice flour, protease, and water used as raw materials in the steps described above are collectively or separately subjected to dough production. Thus, dough made from rice flour can be produced. 1-2-3. Heating step

In the "heating step," the dough made from rice flour is heated at a predetermined temperature for a given period of time. In this step, starch and protein in rice flour are blended with water and the protein contained in the rice flour is degraded by the protease. The object of the present invention can be achieved by this step.

The heating step may be continuously carried out, or one or more intermittences may be present during the step. When the heating step is continuously carried out at a predetermined heating temperature for a given period of time as described below, it is referred to as "continuous treatment" herein, and it is referred to as an "intermittent treatment" when the treatment is carried out intermittently. In a case of intermittent treatment, each intermittent instance of treatment takes place once every 15 hours or less, and preferably once every 10 or 5 hours or less.

In the case of a continuous treatment, for example, the heating step may be carried out after the protease-mixing step, or the heating step may be carried out after the producing step of dough made from rice flour carried out simultaneously with the protease-mixing step.

In the case of an intermittent treatment, for example, the heating step may be divided into a "first heating step" that is carried out between the producing step of dough made from rice flour and the protease-mixing step and a "second heating step" that is carried out after the protease-mixing step. Even if the heating step is collectively carried out without division into two steps as described above, the step may be regarded as constituting intermittent treatment herein if heating at the temperature described below is interrupted during the period of heating.

### (1) Heating temperature

In this step, the heating temperature is the most important and characteristic condition according to this aspect, and such temperature is 40°C or more but less than 60°C. When rice flour that had been treated at temperature outside the temperature range described above is used, an object of the invention according to the present application; that is, bread made from 100% rice flour that raises well and is finely textured, cannot be achieved. Preferably, heating is carried out at 45°C or more but less than 60°C.

If the temperature is between 40°C and less than 60°C, the heating temperature before an intermittent instance of treatment is not necessarily the same as that after such instance. When the heating step is divided into two steps; i.e., a first heating step and a second heating step, and the two steps are separately carried out, the first heating step can be carried out at 45°C or more but less than 55°C, and the second heating step can be carried out at 47.5°C or more but less than 60°C.

### (2) Heating duration

In this step, dough made from rice flour is heated at the temperature described above for a given period of time. Specifically, the heating duration is 3 to 20 hours. A preferable heating duration is 6 to 18 hours. The term "heating duration" used herein refers to the total period during which the dough made from rice flour is treated at the heating temperature described above. When this step takes place intermittently, accordingly, it is sufficient if the total period during which the treatment is carried out at the heating temperature described above is within the range described above.

In this step, the heating temperature before a given intermittent instance is not necessarily the same as that in the subsequent such instance. When the heating step is divided into two steps; i.e., a first heating step and a second heating step, the heating duration in the first heating step can be 2 to 17 hours or 5 to 16 hours, and that in the second heating step can be 30 minutes to 5 hours or 1 to 4 hours. It is preferable that the duration of the first heating step after the producing step of dough made from rice flour be relatively long, so as to blend the starch or protein in rice flour with water. In contrast, the duration of the second heating step after the protease-mixing step may be relatively short, such as at least 30 minutes, preferably at least 1 hour, and more preferably at least 2 hours, although it varies depending on the amount of protease to be added.

### (3) Heating method

Heating can be carried out in accordance with any known technique, provided that the dough is heated to the temperature described above and maintained at such temperature during the duration described above. For example, a heat-retaining apparatus, such as an incubator or proofer, may be used.

### 1-3. Effects

According to the method for treatment of rice flour with protease of this aspect, a protein contained in rice flour grains in the dough can be adequately degraded, and properties such that the dough can easily retain air bubbles therein can be achieved. While the precise mechanism thereof is not elucidated, cohesiveness of hydrated rice flour grains may be denatured as a result of protease treatment (Hamada et al., 2013, Journal of Cereal Science 57: 91-97). According to the method for treatment of this aspect, in addition, dough made from protease-treated rice flour according to the second aspect can be produced.

### 2. Dough made from protease-treated rice flour

### 2-1. Summary

The second aspect of the present invention relates to dough made from protease-treated rice flour. The dough made from protease-treated rice flour according to this aspect is obtained by the method for treatment of rice flour with protease according to the first aspect. The dough made from protease-treated rice flour according to this aspect can serve as a raw material for the dry dough made from protease-treated rice flour according to the third aspect, the protease-treated rice flour according to the fourth aspect, and the method for producing bread made from rice flour according to the fifth aspect described below.

### 2-2. Constitution

The dough made from protease-treated rice flour according to this aspect is produced through a process comprising producing step of dough made from rice flour, protease-mixing step, and heating step. The producing step of dough made from rice flour, the protease-mixing step, and the heating step are the same as those described with respect to the first aspect. Accordingly, specific description thereof is omitted herein.

The dough made from protease-treated rice flour obtained after the heating step has acquired properties such that it can retain air bubbles therein since a protein in rice flour is adequately degraded by protease.

### 2-3. Results

The dough made from protease-treated rice flour obtained in this aspect can be subjected to drying and then used as a raw material for the dough made from protease-treated rice flour according to the third aspect. Without the drying step, alternatively, bread dough used in the method of producing bread made from rice flour according to the fifth aspect can be prepared.

### 3. Dry dough made from protease-treated rice flour

### 3-1. Summary

The third aspect of the present invention relates to dry dough made from protease-treated rice flour. The dry dough made from protease-treated rice flour of this aspect is obtained with the use of, as a raw material, the dough made from protease-treated rice flour according to the second aspect and drying the same. With the use of the dry dough made from protease-treated rice flour according to this embodiment, dough made from protease-treated rice flour, which is lightweight, has high storage stability, and is easily transported, can be obtained.

### 3-2. Constitution

The dry dough made from protease-treated rice flour according to this aspect is composed of the dough made from protease-treated rice flour according to the second aspect, which is obtained by the method for treatment of rice flour with protease according to the first aspect. The dry dough made from protease-treated rice flour according to this aspect is obtained by merely drying the dough made from protease-treated rice flour according to the second aspect. Accordingly, the composition of the dry dough according to this aspect is basically the same as that of the dough made from protease-treated rice flour according to the second aspect, except for its water content. The water content of the dry dough is preferably 15% or less because mold is likely to occur during storage if water content exceeds 15%. Water content is more preferably between 5% and 13% and further preferably between 8% and 12%.

The form of the dry dough made from protease-treated rice flour is not particularly limited, provided that it is in a solid form with water content of 15% or less. For example, it may be a mass, plate, bar (including a noodle-like form), small piece, chip, granule, or powder. When the dry dough made from protease-treated rice flour is not in a mass form but is composed of a plurality of fragments or grains, the sizes of fragments or grains are preferably equivalent to each other, although such sizes may be different from each other.

### 3-3. Method of production

The dry dough made from protease-treated rice flour according to this aspect can be produced using, as a raw material, the dough made from protease-treated rice flour according to the second aspect through the drying step. According to need, the fragmentation step can be carried out before and after the drying step. Hereafter, the steps described above are described in detail.

### 3-3-1. Drying step

In the "drying step," the dough made from protease-treated rice flour according to the second aspect is dried, so as to obtain dry dough made from protease-treated rice flour. This step is essential for the method for producing dry dough made from protease-treated rice flour.

In this step, "drying" is intended to reduce the moisture content of the dough made from protease-treated rice flour. The method of drying is not particularly limited, provided that the moisture content of the dough made from rice flour can be reduced. Examples of methods include a method of circulation drying in which warm air or cold air is applied to dough with the use of a blower or the like, a method of calm drying in which moisture is allowed to evaporate from dough via heating, a method of spray drying in which dough is sprayed and rapidly dried in air, a method of freeze drying, a method of vacuum drying in which dough is dried via deaeration of a sealed container with the use of a vacuum pump or the like, a method of air drying in which dough is exposed to air and allowed to stand (including via drying in the sun), and any combination thereof. With the use of various dryers employing such methods, dough made from protease-treated rice flour may be dried. Examples of dryers that can be used include a drum dryer, a far-infrared band dryer, a continuous vacuum dryer, a spray dryer, and a freeze dryer. When dry dough made from protease-treated rice flour is dried via spray drying or other means with the use of a spray dryer or the like, the dough is pulverized at the same time as it is being dried. Thus, dry dough can be prepared in a powder form without the trituration step described below.

### 3-3-2. Fragmentation step

In the "fragmentation step," dough made from protease-treated rice flour is fragmented. This step is an alternative step in the method for producing dry dough made from protease-treated rice flour, which may be carried out according to need. When a spray dryer or the like is used in the drying step as described above, for example, the product that results after the drying step is in a powder form. Thus, this step is not necessary.

When the fragmentation step is carried out, either the fragmentation step or the drying step may be first carried out without particular limitation. When the dough made from protease-treated rice flour is in a paste form, for example, the fragmentation step may be followed by the drying step, or the drying step may be followed by the fragmentation step. The fragmentation step may be carried out two times; that is, before and after the drying step. If the fragmentation step is carried out before the drying step, the surface area of the resulting dough made from protease-treated rice flour can be increased, and the drying time can be shortened. By performing the fragmentation step before the drying step, the absorption rate or transportability of dry dough made from rice flour can be improved, and bulkiness can be adjusted.

The term "fragmentation" used herein refers to preparation of dough made from protease-treated rice flour in the form of a chip, small piece, or granule with a grain size of at least 90 µm, and preferably at least 100 µm, via cleavage and/or trituration. The dough made from protease-treated rice flour can be fragmented with the use of a method or an apparatus known in the art. For example, a known fragmentation apparatus or granulation apparatus, such as a conversing mill, a line mill, an extrusion granulator, a crushing granulator, or a dry compression granulator, may be used.

### 3-4. Effects

The weight of the dry dough made from protease-treated rice flour according to the present invention can be reduced and the storage stability and transportability thereof can be improved by drying the dough made from protease-treated rice flour according to the second aspect. Thus, a large quantity of dough made from protease-treated rice flour can be easily distributed. The dry dough made from protease-treated rice flour according to the third aspect can serve as a raw material of the dry powder of the protease-treated rice flour according to the fourth aspect and that of the method for producing the bread made from rice flour according to the fifth aspect.

### 4. Dry powder of protease-treated rice flour

### 4-1. Summary

The fourth aspect of the present invention relates to dry powder of protease-treated rice flour. The dry powder of the protease-treated rice flour according to this aspect is obtained by powdering the dry dough made from protease-treated rice flour according to the third aspect as a raw material when it is in a solid form other than a powder form. As a result of powdering, dough made from protease-treated rice flour can be provided in a form that can be easily used for cooking.

### 4-2. Constitution

The dry powder of the protease-treated rice flour according to this aspect is composed of the dough made from protease-treated rice flour according to the second aspect, which is obtained by the method for treatment of rice flour with protease according to the first aspect. Since the dry powder of the protease-treated rice flour according to this aspect is merely a powder form of the dough made from protease-treated rice flour according to the second aspect, in principle, the composition thereof is the same as that of the dough made from protease-treated rice flour according to the second aspect. Water content may be equivalent to that of the dry dough made from protease-treated rice flour according to the third aspect.

A form of the dry powder of the protease-treated rice flour according to this aspect is fine powder. The grain size of the dry powder of the protease-treated rice flour may be from 5 µm or more but less than 90 µm on average. As described above, the raising extent is likely to increase as the grain size decreases. Thus, the average grain size is preferably between 5 µm and 20 µm.

### 4-3. Method of production

The dry powder of the protease-treated rice flour according to this aspect can be obtained by triturating the dry dough made from protease-treated rice flour according to the third aspect as a raw material in the trituration step when it is in a solid form other than powder. A sieving step and a repeating step can be carried out, if necessary.

### 4-3-1. Trituration step

In the "trituration step," the dry dough made from protease-treated rice flour according to the third aspect is pulverized to prepare powder. This step is essential when the dry dough made from protease-treated rice flour according to the third aspect is in a form other than powder, such as a mass, plate, bar (including a noodle-like form), small piece, chip, or granule.

The dry dough made from protease-treated rice flour can be powdered with the use of a method or apparatus known in the field of milling. For example, a roll mill or a grinding mill may be used.

### 4-3-2. Sieving step

In the "sieving step," the product after the trituration step is subjected to sieving, so as to select the pulverized dry powder of the protease-treated rice flour in accordance with grain size. This step is an alternative step, which may be carried out according to need. This step can be carried out with the use of a method or apparatus known in the field of milling, such as a shifter. The product after the trituration step is allowed to pass through a plurality of sieves with different mesh sizes. Thus, the grain size of the dry powder of the protease-treated rice flour according to this aspect can be made uniform, or the dry powder of the protease-treated rice flour with different grain sizes can be obtained.

### 4-3-3. Repeating step

In the "repeating step," the trituration step and the sieving step are repeated. Among dry powders of the protease-treated rice flour with different grain sizes selected in the sieving step, dry powders of the protease-treated rice flour with grain sizes outside a grain size range of interest are subjected to the trituration step again and then to the sieving step. Thus, dry powders with grain sizes of interest can be achieved. The number of repetitions is not particularly limited, and it may be adequately determined in accordance with the grain size of the dry powder of the protease-treated rice flour achieved after the sieving step. In general, the number of repetitions is 1 to 10, and preferably 1 to 5.

### 4-4. Effects

The dry powder of the protease-treated rice flour according to this aspect is gluten-free rice flour; however, the dough thereof can easily retain air bubbles. Thus, it can be used as gluten-free cereal flour that can serve as an alternative to wheat flour for a variety of meals or food products that had been prepared with the use of wheat flour as a raw material in the past. For example, the dry powder of the present invention can serve as an alternative to wheat flour for gluten-free powder for noodle preparation, a raw material for confectionaries such as cookies or cakes, batter for deep-fried foods or meunieres, or roux as a thickener for sauces, in addition to bread.

With the use of the dry powder of the protease-treated rice flour according to this aspect, the laborious process for treatment of rice flour with protease has already been completed. Thus, bread made from 100% rice flour that raises well and is finely textured can be easily produced at a bakery or in a home by merely preparing bread dough and fermenting the prepared bread dough and baking without the producing step of dough or the heating step.

Patients with celiac disease can ingest bread of non-wheat-flour-based products; i.e., rice flour products exhibiting mouth feeling textures and flavors equivalent to those of wheat-flour-based products such as breads, which are restricted until now. The dry powder of the protease-treated rice flour according to this aspect can be stored at an adequate temperature (e.g., 15°C to 25°C) for one year, and preferably for 10 months. In addition, the produced bread can remain well-raised and retain its fine texture after storage.

While rice is the only cereal resource that is capable of self-sufficient production in Japan, the amount of consumption thereof has been decreasing in recent years because of the Westernization of the food culture. The dry powder of the protease-treated rice flour according to this aspect can serve as a raw material for "bread" and the like, the market scale of which is large, and contribute to the increased consumption of rice in Japan.

### 5. Method for producing bread made from rice flour and bread made from rice flour

### 5-1. Summary

The fifth aspect of the present invention relates to a method for producing bread made from rice flour and bread made from rice flour produced by such method. The method for producing bread made from rice flour according to this aspect involves the use of the dough made from protease-treated rice flour according to the first aspect, the dry dough of rice flour, or the rice flour. According to the method for producing bread made from rice flour of this aspect, 100% gluten-free bread made from rice flour that raises well and is finely textured can be produced.

### 5-2.Method of production

The method for producing bread made from rice flour according to this aspect comprises a producing step of fermented-dough, a fermentation step, and a baking step. These steps are not different from those of conventional methods for producing wheat-flour-based bread, except for using the protease-treated rice flour according to the first aspect as a raw material alternative to wheat flour as described above. Hereafter, each step of production is described.

### 5-2-1. Step of producing fermented-dough

In the "step of producing fermented-dough, "the dough made from protease-treated rice flour according to the second aspect, the dry dough made from protease-treated rice flour according to the third aspect, or the dry powder of the protease-treated rice flour according to the fourth aspect is used as a main raw material, yeast and sugar are added thereto, and the resulting mixture is kneaded to produce fermented-dough. Any yeast for food application can be used without limitation. Use of dry yeast (*S. cerevisiae*) that can be easily obtained is convenient. Any sugar can be used without limitation, provided that it can serve as a carbon source of yeast. Examples thereof include sucrose (sugar), glucose, and fructose. In addition, auxiliary materials can be added, according to need. Examples of auxiliary materials include salt, an emulsifier, butter, egg (egg white and/or egg yolk), yeast food, fat and oil, an aromatic, the sweetening agent as described above, the thickener as described above, the food color as described above, the food preservative as described above, the antioxidant as described above, the leavening agent as described above (including baking powder), and a vitamin (as an enrichment or food preservative). If the production of 100% gluten-free bread made from rice flour is not intended, wheat flour (with hard flour being preferable) may be added. The amounts of yeast, sugar, and auxiliary materials to be added to the dough made from protease-treated rice flour, the dry dough made from protease-treated rice flour, or the dry powder of the protease-treated rice flour (% by weight) may be determined in accordance with a general recipe known in the baking industry. After the raw materials have been mixed, water is adequately added thereto, so as to achieve an adequate degree of viscosity as bread dough.

Use of a kneader (e.g., a blender) is convenient for kneading. When baking bread in a home, a domestic-use blender may be used. When a KitchenAid blender is used, for example, kneading may be carried out at the 4th to 6th speed for approximately 5 to 15 minutes, and more preferably at the 6th speed for approximately 10 minutes.

### 5-2-2. Fermentation step

In the "fermentation step," the produced dough to be fermented is subjected to fermentation. For example, the fermented-dough obtained after the step of producing fermented-dough is subjected to proofing. Prior to the initiation of the present step, the fermented-dough is introduced into a mold or fixed in accordance with a form of interest, according to need. Fermentation may be carried out within a temperature range in which yeast can grow. This is generally 25°C to 40°C and preferably 27°C to 38°C. The duration of fermentation is 30 to 90 minutes, and preferably 40 to 60 minutes. In order to prevent bread from being crushed, proofing is adequately terminated when the fermentation dough raises to a level such that the volume is approximately double the volume before treatment as a result of fermentation.

### 5-2-3. Baking step

In the "baking step," the bread dough resulting after the fermentation step is baked. This step may be carried out in accordance with a baking method by a known bread baking method. When a domestic-use oven or the like is used, for example, baking may be carried out at 140°C to 190°C, and preferably 140°C to 160°C, for 30 to 40 minutes. In comparison with general wheat-flour-based bread, the surface of bread made from 100% rice flour is likely to harden as a result of baking. It is thus preferable that baking be carried out via heating (i.e., moistening) while avoiding extremely high temperatures.

### 5-3. Features of bread made from rice flour

The method for producing bread made from rice flour according to this aspect is intended to produce bread made from 100% rice flour with the use of, as a main raw material, dough made from protease-treated rice flour according to the second aspect, dry dough made from protease-treated rice flour according to the third aspect, or dry powder of the protease-treated rice flour according to the fourth aspect. Accordingly, an object to be achieved by this aspect (that is, bread made from rice flour) is, in principle, bread made from 100% rice flour.

The term "bread made from 100% rice flour" used herein refers to bread that is produced with the exclusive use of cereal flour other than rice flour as a raw powder material and without the addition of gluten. Accordingly, the term "bread made from 100% rice flour" is substantially synonymous with the term "100% gluten-free bread made from rice flour" herein. It should be noted that inclusion of a minor amount of other cereal flour may be impossible to avoid during milling or production, and, accordingly, bread comprising 98% or more, 99% or more, or 99.5% or more rice flour as powder is within the scope of the "bread made from 100% rice flour." In such a case, it is preferable that gluten-containing cereal flour, such as wheat flour, not be included.

The bread made from 100% rice flour according to this aspect is produced with the use of 100% rice flour as a raw material of cereal flour; however, such bread raises well and is finely textured. Accordingly, such bread is superior to bread made from 100% rice flour produced by a conventional technique in terms of tenderness, fineness, and desirable mouth feeing texture.

### 5-4. Effects

According to the method for producing bread made from rice flour of this aspect, bread made from 100% rice flour that raises well and is finely textured can be easily produced at town bakeries or in homes that are not fully equipped with facilities for protease treatment of rice flour.

The bread made from rice flour according to this aspect is 100% gluten-free bread made from rice flour that raises well and is finely textured. Thus, it can be utilized as an alternative food for wheat-flour-based bread that can be supplied to patients with wheat allergies (i.e., gluten allergies), such as patients with celiac disease.

### Examples

### [Example 1: Correlation between temperature for protease treatment of rice flour and raising extent and texture of bread made from 100% rice flour]

### (Objectives)

The correlation between the temperature for protease treatment and the raising extent and other properties of the bread made from 100% rice flour produced with the use of the rice flour after protease treatment is examined.

### (Method)

To 210g (water content in powder: 14%) of white rice flour (rice variety: Koshihikari), 210mL of water and 150 U/mL of protease were added, and the mixture was kneaded using a domestic-use hand blender (THM280 or THM281; Tescom Co., Ltd.) for 3 minutes to prepare dough.

As protease, *Aspergillus sp*.-derived Proteax (Amano Enzyme Inc.) or *Bacillus sp.-*derived Thermoase (Amano Enzyme Inc.) was used. Subsequently, the protease was added to the resulting dough made from rice flour, and the resultant was incubated in an incubator (MIR-254; SANYO Electric Co., Ltd.: ND-420 for the treatment carried out at 65°C; Tokyo Rikakikai Co., Ltd.) at 25°C, 35°C, 45°C, 47.5°C, 50°C, 55°C, 60°C, and 65°C for 15 hours. Protease was added to adjust the protease activity to 150U in 1mL of the dough made from rice flour. After the incubation treatment, 10g of sugar, 3g of salt, and 3g of dry yeast (Lesaffre) were added to 420g of the dough made from protease-treated rice flour, the mixture was kneaded with the use of a domestic-use blender (KSM150; KitchenAid) for 15 minutes, and the resulting dough was introduced into a bread mold and then subjected to proofing in an electronic fermentator (Proofer SK-15; Taisho Electric Mfg. Co., Ltd.) at 38°C for 50 minutes. Proofing was terminated when the fermentation dough rose to result in a volume approximately double the volume before treatment, and the dough was baked in a domestic-use oven (NE-R301; Panasonic Corporation) at 160°C for 30 minutes. The raising extent and the fineness of the texture inside the baked bread made from 100% rice flour were examined.

In this description, protease activity in the dough was measured using casein (Wako Pure Chemical Industries, Ltd.) as a substrate and the Pierce Protease Assay Kit (Thermo Fisher Scientific K.K.). For such measurement, protease activity of a solution of 10µg/mL trypsin was designated as being 1U, and the protease activity level of dough made from rice flour was assayed on the basis thereof.

### (Results)

Fig. 2A shows the results achieved with the use of Proteax and Fig. 2B shows the results attained with the use of Thermoase. As shown in Fig. 2A, the raising extent and the fineness of the texture of the bread were completely lost when protease treatment was carried out at 60°C or higher. When treatment was carried out at 35°C or lower, the resulting bread exhibited an insufficient raising extent and a coarse texture. When treatment was carried out at 45°C to 55°C, however, bread made from rice flour was produced, which was well-raised and finely textured. A similar trend was observed with the use of Thermoase, as shown in Fig. 2B. Thus, the temperature for protease treatment to be carried out in the method for treatment of rice flour with protease according to the present invention was designated as being 40°C or more but less than 60°C.

According to the invention disclosed in JP2014-33646A, the conditions for protease treatment of rice flour are designated to be such that heating is carried out at 15°C to 30°C for 5 to 30 hours with the use of *Bacillus stearothermophilus*-derived protease (Thermoase). According to the present invention, however, the optimal temperature range for protease treatment of rice flour is from 40°C or more but less than 60°C, which is at least 10°C higher than the temperature range disclosed in JP2014-33646A, regardless of whether Thermoase or Proteax is used. The present invention is significantly different from the invention disclosed in JP2014-33646A in this respect.

### [Example 2: Correlation between duration of protease treatment and raising extent and texture of bread made from 100% rice flour]

### (Objectives)

The correlation between the duration of protease treatment and the raising extent and other properties of the bread made from 100% rice flour produced with the use of the rice flour after protease treatment is examined.

### (Method)

The basic procedure was carried out in accordance with Example 1, except that the "Konadamon" rice variety was used, the temperature for protease treatment with Proteax was set at 55°C, and the treatment durations were set at 2 hours, 6 hours, and 15 hours.

### (Results)

The results are shown in Fig. 3. As the treatment duration was prolonged, the raising extent and the texture of the resulting bread made from 100% rice flour were improved. When the treatment duration was 2 hours, the resulting bread exhibited an insufficient raising extent and a coarse texture. Accordingly, the duration of protease treatment for the method for treatment of rice flour with protease according to the present invention was designated as being 3 hours to 20 hours.

### [Example 3: Production of breads made from 100% rice flour using dough made from various types of protease-treated rice flour]

### (Objectives)

With the use of the doughs made from protease-treated rice flour according to the present invention, which were prepared from a variety of proteases derived from different organism species, breads made from 100% rice flour are produced, and the raising extent and the texture thereof are examined.

### (Method)

The basic procedure was carried out in accordance with Example 1. The specific procedure was as described below. To 210g (water content in powder: 14%) of white rice flour (rice variety: Konadamon), 210mL of water and various proteases were added, and the mixture was kneaded using a domestic-use hand blender (THM280 or THM281; Tescom Co., Ltd.) for 3 minutes to prepare dough (the step of producing dough made from rice flour and the protease-mixing step).

Various proteases were added, so as to adjust protease activity in the dough made from rice flour to the levels described below relative to 1mL of the dough made from rice flour: 150U Proteax (derived from *Aspergillus sp*.; Amano Enzyme Inc.); 150U protease A (derived from *Aspergillus sp*.; Amano Enzyme Inc.); 150U protease M (derived from *Aspergillus sp*.; Amano Enzyme Inc.); 600U protease P (derived from *Aspergillus sp.;* Amano Enzyme Inc.); 7.0U protin (derived from *Bacillus sp*.; Amano Enzyme Inc.); 150U Thermoase (derived from *Bacillus sp*.; Amano Enzyme Inc.); 6.9U peptidase R (derived from *Rhizopus sp*.; Amano Enzyme Inc.); and 600U papain (derived from *Carica papaya L.;* Amano Enzyme Inc.). Protease activity in the dough made from rice flour was measured using casein (Wako Pure Chemical Industries, Ltd.) as a substrate and the Pierce Protease Assay Kit (Thermo Fisher Scientific K.K.). For this measurement, protease activity of a solution of 10µg/mL trypsin was designated as being 1U, and the protease activity level of the dough made from rice flour was set on the basis thereof. Subsequently, the resulting dough made from rice flour was incubated in an incubator (MIR-254; SANYO Electric Co., Ltd.) at 55°C for 15 hours (the heating step).

After the incubation treatment, 10g of sugar, 3g of salt, and 3g of dry yeast (Lesaffre) were added to 420g of the dough made from protease-treated rice flour, and the mixture was kneaded with the use of a domestic-use blender (KSM150; KitchenAid) for 15 minutes to produce the fermentation dough (the step of producing fermentation dough).

The resulting dough was introduced into a bread mold and then subjected to proofing in an electronic fermentator (Proofer SK-15; Taisho Electric Mfg. Co., Ltd.) at 38°C for 60 minutes (the fermentation step).

Proofing was terminated when the fermentation dough rose to result in a volume approximately double the volume before treatment, and the dough was baked in a domestic-use oven (NE-R301; Panasonic Corporation) at 160°C for 30 minutes (the baking step).

The raising extent and the fineness of the texture inside the baked bread made from 100% rice flour were examined.

### (Results)

The results are shown in Fig. 4. According to the invention disclosed in JP2014-33646A, an effective protease has been designated as being a protease derived from *Bacillus stearothermophilus* (e.g., Thermoase), and the effects of treatment with other proteases, such as protease A, protease M, and protease P, have been denied. When the treatment was carried out under the conditions (i.e., the temperature and the duration) according to the present invention, in contrast, well-raised and finely textured bread made from 100% rice flour was produced with the use of various proteases, regardless of the types of proteases or organism species from which proteases were derived.

### [Example 4: Production of bread made from 100% rice flour using dry powder of protease-treated rice flour]

### (Objectives)

The dough made from protease-treated rice flour is dried and bread made from 100% rice flour is produced with the use of the dry powder of the protease-treated rice flour. Whether or not the resulting bread is well-raised and finely textured is examined.

### (Method)

The procedure up to the heating step was carried out in accordance with the method described in Example 3. Various proteases were added, so as to adjust protease activity to the levels described below relative to 1mL of the dough made from rice flour: 150U Proteax (derived from *Aspergillus sp*.; Amano Enzyme Inc.) and 150U protease A (derived from *Aspergillus sp.;* Amano Enzyme Inc.).

Subsequently, the resulting dough made from protease-treated rice flour was subjected to circulation drying in an incubator (WFO-600ND; Tokyo Rikakikai Co., Ltd.) at 55°C for 6 hours or calm drying in an incubator (MIR-254; SANYO Electric Co., Ltd.) at 55°C for 15 hours (the drying step). The resulting dry dough made from protease-treated rice flour was pulverized or more but less than 90µm (average grain size: approximately 9µm) with the use of a Millser (IFM-503M; Iwatani Corporation) (grinding step).

With the use of the dry powder of the protease-treated rice flour produced, bread made from 100% rice flour was produced. The method of production was carried out in accordance with the procedure after the step of producing fermentation dough described in Example 3. In order to confirm the storage stability of the dry powder of the protease-treated rice flour, parts of the dry powder of the protease-treated rice flour produced were stored at 25°C for 1 month, 3 months, and 10 months, and bread made from 100% rice flour was then produced using the same in the manner described above.

As a control example of the present invention, dough made from rice flour was produced in accordance with the method for producing bread made from 100% rice flour in which rice flour was subjected to pre-fermentation with the use of malted rice (JP2012-115197A). The resulting dough made from rice flour was dried at 55°C in the same manner as with the dough made from protease-treated rice flour according to the present invention. Thereafter, bread made from 100% rice flour was produced with the use of rice flour that had been pulverized in the same manner. The raising extent and the texture observed in a cross section of the resulting bread made from 100% rice flour were examined.

### (Results)

The results are shown in Fig. 5. Fig. 5 shows the results achieved with the use of Proteax as a protease. When the dry powder of the protease-treated rice flour according to the present invention obtained by circulation drying or calm drying was used (the method of production involving drying and reproduction), the resulting bread made from 100% rice flour had raisen well and was finely textured to an extent equivalent to that of the bread made from 100% rice flour produced by the method described in Example 3 without the drying step (the basic method of production) ("Immediately after production" in Fig. 5). When the dry powder of the protease-treated rice flour was stored at 25°C for 1 month, 3 months, and 10 months after the production and bread made from 100% rice flour was then produced, also, the resulting bread had raised well and was finely textured to an extent equivalent to that of the bread produced immediately after the production of the dry powder of the protease-treated rice flour ("1 month," "3 months," and "10 months" in Fig. 5). Similar results were achieved with the use of protease A (not shown).

When bread made from 100% rice flour was produced with the use of rice flour treated with malted rice via the method of production according to JP2012-115197A (the basic production method), the resulting bread rose well. When dry dough made from rice flour treated with pulverized malted rice was used, however, the raising extent declined and the fine texture of the bread was lost. Such phenomena are considered to have resulted from excessive degradation of a protein in rice flour as a result of progression of a reaction of an enzyme derived from malted rice during the process of dough drying.

The results described above demonstrate that, with the use of the dry powder of the protease-treated rice flour obtained by drying and pulverizing the dough made from protease-treated rice flour according to the present invention, bread made from 100% rice flour that raises well and is finely textured to an extent equivalent to that of dough made from protease-treated rice flour can be produced after storage for 6 months or longer.

### [Example 5: Production of bread made from 100% rice flour without protease treatment]

### (Objectives)

Without the protease-mixing step, bread made from 100% rice flour is produced via the producing step of dough made from rice flour and the heating step of dough made from rice flour. The raising extent and other properties of the resulting bread are examined.

### (Method)

To 210 g (water content in powder: 14%) of white rice flour (rice variety: Koshihikari), 210 ml of water was added, and the mixture was kneaded using a domestic-use hand blender (THM280 or THM281; Tescom Co., Ltd.) for 3 minutes to prepare dough (the step of producing dough made from rice flour). Subsequently, the resulting dough made from rice flour was incubated in an incubator (MIR-254; SANYO Electric Co., Ltd.) at 25°C, 35°C, 45°C, 47.5°C, 50°C, 55°C, and 60°C for 15 hours (the heating step dough made from rice flour). After the incubation treatment, 10g of sugar, 3g of salt, and 3g of dry yeast (Lesaffre) were added to 420g of the dough made from rice flour, and the mixture was kneaded with the use of a domestic-use blender (KSM150; KitchenAid) for 15 minutes (the step of producing fermentation dough). The resulting dough was introduced into a bread mold and then subjected to proofing in an electronic fermentator (Proofer SK-15; Taisho Electric Mfg. Co., Ltd.) at 38°C for 50 minutes (the fermentation step). Proofing was terminated when the dough rose to result in a volume approximately double the volume before treatment, and the dough was baked in a domestic-use oven (NE-R301; Panasonic Corporation) at 160°C for 30 minutes (the baking step). The raising extent and the fineness of the texture inside the baked bread made from 100% rice flour were examined.

### (Results)

The results are shown in Fig. 6. When the dough was heated at 60°C or 25°C, the raising extent and the fineness of the texture were completely lost. That is, bread made from 100% rice flour could not be obtained. When heating was carried out at 35°C or more but less than 60°C, however, well-raised bread made from 100% rice flour was obtained, although its texture was coarse. It was thus discovered that well-raised bread made from 100% rice flour could be produced via a simple and cost-effective method in which dough made from rice flour would be heated at 35°C or more but less than 60°C for a given period of time without protease treatment. Since such bread made from 100% rice flour has a coarse and poor mouth feeling texture, the use thereof as bread is not appropriate, but it can be used for processed bread products, such as bread crumbs.

### [Example 6: Production of bread made from 100% rice flour by dividing the heating step (1)]

### (Objectives)

The raising extent and other properties of the bread made from 100% rice flour produced by treating the dough made from rice flour while separately conducting the heating step before the protease-mixing step and after the protease-mixing step are examined.

### (Method)

To 210g (water content in powder: 14%) of white rice flour (rice variety: Koshihikari), 210mL of water was added, and the mixture was kneaded using a domestic-use hand blender (THM280 or THM281; Tescom Co., Ltd.) for 3 minutes to prepare dough (the step of producing dough made from rice flour). Subsequently, the resulting dough made from rice flour was incubated in an incubator (MIR-254; SANYO Electric Co., Ltd.) at 55°C for 15 hours (the first heating step). Thereafter, Proteax (Amano Enzyme Inc.) was added to adjust a protease activity to 900U relative to 1mL of the dough made from rice flour (the protease-mixing step), followed by incubation in an incubator (MIR-254; SANYO Electric Co., Ltd.) at 55°C for 2 or 4 hours (the second heating step). Thereafter, bread made from rice flour was produced in the same manner as in Example 4, and the raising extent and the texture inside the resulting bread made from 100% rice flour were examined.

### (Results)

The results are shown in Fig. 7. When the heating step was separately carried out before the protease-mixing step and after the protease-mixing step, well-raised and finely textured bread made from 100% rice flour was obtained. If the heating treatment was sufficiently carried out at a predetermined temperature for a given period of time during the first heating step, the sufficient duration of the second heating step following the protease-mixing step was found to be 2 hours. This was different from the results achieved in Example 3, in which heating was carried out for 2 hours while conducting a producing step of dough made from rice flour at the same time as conducting a protease-mixing step-. It was thus found that the duration of heating required after the protease-mixing step could be relatively short.

On the basis of the results achieved in Examples 5 and 6, it was found that bread made from 100% rice flour would raise to a sufficient extent during the heating after the step of producing dough made from rice flour and that bread made from 100% rice flour would be provided with a fine texture during the heating after the protease-mixing step.

### [Example 7: Production of bread made from 100% rice flour by dividing the heating step (2)]

### (Objectives)

The raising extent and other properties of the bread made from 100% rice flour produced by the method of the present invention while collectively conducting the heating step without division into two steps for a fixed period of time and those achieved by conducting the steps of heating separately are examined.

### (Method)

The following cases were examined: (1) a case in which the heating step is continuously performed without division into two steps; that is, the heating step substantially consists of the second heating step after the protease-mixing step; (2) a case in which the heating step is divided into a first heating step before the protease-mixing step and a second heating step after the protease-mixing step; and (3) a case in which a protease-mixing step- is not performed; that is, the heating step substantially consists of the first heating step before the protease-mixing step. Hereafter, the cases (1) to (3) are described.
(1) The step of producing dough made from rice flour was carried out at the same time as the protease-mixing step, and the dough made from rice flour was heated at 55°C for 3 hours.
(2) After the step of producing dough made from rice flour, the resulting dough made from rice flour was subjected to a first heating step at 55°C for 2 hours, a protease mixing step , and then a second heating step at 55°C for 1 hour.
(3) After the step of producing dough made from rice flour, the dough made from rice flour was subjected to heating treatment for 2 hours as with the first heating step described in (2) and the heating treatment for 3 hours as with (1) above.

Thereafter, the methods (1) to (3) used in a basic method for bread production were carried out in accordance with Example 6.

### (Results)

The results are shown in Fig. 8. In Fig. 8, A shows the results of (1), C shows the results of (2), and B and D shows the results of (3). On the basis of the results shown in A and C, it was found that bread made from 100% rice flour that raises well and is finely textured could be obtained, regardless of whether the heating step was carried out continuously after the protease-mixing step or the heating step was divided into a first heating step and a second heating step, as long as the total heating time was at least 3 hours during the process of production. It was also found that the duration of heating the dough made from rice flour before protease mixing necessary for the bread made from 100% rice flour to raise (the first heating time) would be at least 2 hours and the duration of heating after protease mixing necessary for the bread made from 100% rice flour to become finely textured (the second heating time) would be at least 1 hour.

In contrast, the results shown in B and the results shown in D demonstrate that bread made from 100% rice flour produced without a protease-mixing step of would raise but its texture would be coarsen, as with the results achieved in Examples 5 and 6, even if the heating duration were to be 2 hours, which was the same as the first heating time as per in C, and it is 3 hours, that is the same as the total heating time shown in A and C, respectively.

All publications, patents, and patent applications cited herein are incorporated herein by reference in their entirety.

## Claims

1. A method for treating rice flour with protease comprising:
producing dough made from rice flour by mixing rice flour with water;
mixing protease with the dough made from rice flour; and
heating the dough made from rice flour at 40°C or more but less than 60°C for 3 to 20 hours.

2. A dough made from protease-treated rice flour obtained by the method comprising
producing dough made from rice flour by mixing rice flour with water,
mixing protease with the dough made from rice flour, and
heating the dough made from rice flour at 40°C or more but less than 60°C for 3 to 20 hours.

3. A method for producing dry dough made from protease-treated rice flour comprising
drying of the dough made from protease-treated rice flour according to claim 2.

4. The method for producing dry dough made from protease-treated rice flour according to claim 3, further comprising fragmenting dough made from rice flour before and/or after the drying step.

5. Dry dough made from protease-treated rice flour obtained by a method comprising
drying of the dough made from protease-treated rice flour according to claim 2.

6. The dry dough made from protease-treated rice flour according to claim 5, which is obtained by a method further comprising fragmenting dry dough made from protease-treated rice flour before and/or after the drying step.

7. A method for producing dry powder of protease-treated rice flour comprising:
triturating the dry dough made from protease-treated rice flour according to claim 5 or 6.

8. The method for producing dry powder of protease-treated rice flour according to claim 7, further comprising
sieving the product after the step of triturating .

9. The method for producing dry powder of protease-treated rice flour according to claim 8, further comprising
repeating the trituration step and the sieving step.

10. Dry powder of protease-treated rice flour obtained by a method comprising:
triturating the dry dough made from protease-treated rice flour according to claim 5 or 6.

11. The dry powder of protease-treated rice flour according to claim 10, which is obtained by a method further comprising
sieving the trituratied product.

12. The dry powder of protease-treated rice flour according to claim 11, which is obtained by a method further comprising
repeating the trituration step and the sieving step.

13. A method for producing bread made from rice flour comprising:
producing fermentation dough by adding yeast and a sugar to the dough made from protease-treated rice flour according to claim 2, the dry dough made from protease-treated rice flour according to claim 5 or 6, or the dry powder of protease-treated rice flour according to any one of claims 10 to 12 and kneading the mixture;
fermenting the fermented dough at 25°C to 40°C; and
baking bread dough after the fermentation step.

14. A bread made from rice flour obtained by a method comprising:
producing fermentation dough by adding yeast and a sugar to the dough made from protease-treated rice flour according to claim 2, the dry dough made from protease-treated rice flour according to claim 5 or 6, or the dry powder of protease-treated rice flour according to any one of claims 10 to 12 and kneading the mixture;
fermenting the fermentation dough at 25°C to 40°C; and
baking bread dough after the fermentation step.

15. A method for treating rice flour comprising:
producing dough made from rice flour by mixing rice flour with water; and
heating the dough made from rice flour at 35°C or more but less than 60°C for 3 to 20 hours.
